# EUROPÄISCHE PATENTSCHRIFT

(11) **EP 0 580 966 B1**
(45) Veröffentlichungstag und Bekanntmachung des Hinweises auf die Patenterteilung: **24.09.1997**
(21) Anmeldenummer: 93107125.2
(22) Anmeldetag: 03.05.1993
(51) Int. Cl.: H01M 4/62

(54) **Verfahren zur Herstellung eines Spreizmittels für negative Elektroden von Bleiakkumulatoren**
Process for producing an expander for lead battery negative electrode
Procédé pour l'obtention d'un expanseur pour électrode négative d'accumulateurs au plomb

(30) Priorität: 22.07.1992 DE 4224134
(43) Veröffentlichungstag der Anmeldung: 02.02.1994
(73) Patentinhaber: VARTA Batterie Aktiengesellschaft, D-30405 Hannover (DE)
(72) Erfinder: Borger, Waldemar, Dr., W-6370 Oberursel (DE); Jostes, Rainer, Dr., W-6234 Hattersheim (DE); Voss, Heinz-Joachim, W-6230 Frankfurt am Main 80 (DE)
(74) Vertreter: Kaiser, Dieter Ralf, Dipl.-Ing.

(56) Entgegenhaltungen:
- DE-A- 3 929 307
- CHEMICAL ABSTRACTS, vol. 112, no. 12, 19. März 1990, Columbus, Ohio, US; abstract no. 102140u, J. RYCHLEWSKI ET AL. 'preparation of expander for lead-acid battery anodes.' Seite 207 ;
- JOURNAL OF POWER SOURCES. Bd. 28, Nr. 1,2 , November 1989 , LAUSANNE CH Seiten 149- - 153 G.J. SZAVA 'mechanism by which organic expanders improve the performance of lead/acid batteries.'

## Beschreibung

Bekanntlich dienen Spreizmittel oder Expander in negativen Bleielektroden dem Ziel, die Bildung grober Bleidendriten beim Laden zu verhindern und dank der Erhaltung einer feinkristallinen Oberflächenstruktur der Elektroden deren Kapazität auf hohem Niveau im Zyklenbetrieb zu stabilisieren. Indem das Spreizmittel an Stellen bevorzugten Wachstums von Bleikristallen ebenso wie von Bleisulfat absorbiert wird, tritt beim Entladen die Festkörperreaktion zugunsten der Reaktion über die Lösung in den Hintergrund. Es entsteht dadurch eine poröse Bleisulfatstruktur, welche eine hohe Masseausnutzung ermöglicht.

Bei den in Batterieelektroden eingesetzten organischen Spreizmitteln handelt es sich in aller Regel um Derivate des Lignins und anderer Holzinhaltsstoffe, welche als Nebenprodukte bei der Zellstoffgewinnung aus Holz anfallen.

Als technische Produkte sind die marktgängigen Spreizmittel nicht einheitlich, wobei man insbesondere bei den technischen Ligninen auch noch nach deren Herkunft aus dem jeweiligen Aufschlußverfahren unterscheidet.

Im einen Fall wird Holz mit saurer Calciumsulfitlösung ("Sulfit-Lauge") gekocht. Dabei gehen die Begleitstoffe des Holzes (Harze, Hemicellulosen, Lignin) in Lösung, während die Cellulose kaum angegriffen wird. Nach Vergären des Alkohols wird die Sulfitablauge stark alkalisch eingestellt und in Gegenwart von Katalysatoren (Cu) unter Druck oxidierend behandelt. Die in der Lösung vorliegende Ligninsulfonsäure wird dabei teilweise entsulfoniert und ein Teil der Methoxygruppen des hochmolekularen Lignins als Methanol abgespalten. Bei diesem Prozeß fallen auch einige Prozente Vanillin an. Die verbleibende Lösung wird dann zu Pulver eingedampft oder durch Umfällen mit Schwefelsäure zuvor von verschiedenen Begleitstoffen gereinigt. Das Endprodukt hat die allgemeine Bezeichnung "Sulfitlignin" oder "Oxylignin" und wird als Natriumsalz unter den Handelsnamen "Vanisperse" bzw. "Marasperse" (Borregaard Ind. Ltd., Sarpsborg, Norwegen) vertrieben.

Ein als "Ligninsäure" oder "Liquinsalz" bezeichnetes technisches Lignin, unter dem Handelsnamen "Indulin" (West Virginia Pulp and Paper Comp., USA) bekannt, stammt dagegen aus einem anderen Holzabbauprozeß, bei dem zerfasertes Holz mit Natronlauge und Natriumsulfid unter Druck und Hitze aufgeschlossen wird (Natronzellstoff-Herstellung). Dabei gehen Lignin und Harze ebenfallls in Lösung. Die Lösung (Schwarzlauge) wird bei erhöhter Temperatur mit Schwefelsäure angesäuert und die ausfallende "Ligninsäure" abgetrennt. Zur Reinigung kann eine nochmalige Umfällung mit Natronlauge und Schwefelsäure vorgenommen werden.

Aus einer dritten Quelle für technisches Lignin, der Holzverzuckerung, geht das Holzzuckerlignin, auch "Säurelignin" hervor.

Von besonderer Bedeutung ist die Wirkungsweise organischer Spreizmittel bei tiefen Temperaturen und hinsichtlich ihres Einsatzes in Starterbatterien, da diese selbst bei sehr niedrigen Temperaturen in der Lage sein müssen, das Kraftfahrzeug zuverlässig zu starten.

Dabei besteht aufgrund allgemeiner Erfahrung der Batteriefachleute und durch zahlreiche Untersuchungen nachgewiesen eine Konfliktsituation, dergestalt, daß ein gutes Spreizmittel in der negativen Elektrode einerseits die Kaltstartkapazität erhöht, anderseits die Ladungsaufnahme bei tiefen Temperaturen verschlechtert. Durch Herabsetzen der Expandermenge läßt sich die Ladungsaufnahme zwar verbessern, jedoch geschieht dies dann auf Kosten der Kaltstartkapazität.

Die Inhibierung der Ladereaktion ist auf die durch die Anwesenheit von Spreizmittel verminderte Auflösungsrate von PbSO₄ zurückzuführen, entweder infolge der größeren PbSO₄-Kristalle oder infolge der starken Adsorption des Spreizmittels am Bleisulfat. Dadurch wird die spreizmittelhaltige Negative allmählich zur kapazitätsbegrenzenden Elektrode, bis die Batterie schließlich ganz versagt.

Andere Maßnahmen wie z.B. die Erhöhung der Elektrolytsäuredichte verbessern ebenfalls die Kaltstartleistung, sind aber wiederum der Ladungsaufnahme abträglich.

Es wurde bereits vorgeschlagen, einen Kompromiß zwischen diesen antagonierenden Tendenzen dadurch zu erreichen, daß man in den Elektroden eines negativen Plattensatzes verschiedene Dosierungen an Expander vorsieht oder daß den Elektroden unterschiedliche Expanderarten beigemischt sind (DE-OS 3828374). Nach einem anderen Vorschlag soll das Spreizmittel in gelöster oder dispergierter Form lediglich auf die innere Oberfläche einer bereits formierten negative Elektrode homogen verteilt aufgebracht und dort adsorptiv am Blei gebunden werden (DE-OS 3929307).

Durch W.S. Nip, G. Verville und P.R. Roberge (Power Sources 13 (1991) S.1 bis 12) ist es bekannt, "gute" und "schlechte" Expandertypen durch bestimmte pH-Bedingungen, unter denen sie aus wässerigen Lösungen ausfallen, zu charakterisieren.

Der Anmeldung liegt die Aufgabe zugrunde, ein Verfahren zur Herstellung eines Spreizmittels für negative Bleielektrode anzugeben, dessen Verfahrensprodukt die Forderungen nach gutem Kaltstart und Zyklenfestigkeit einerseits und hoher Ladungsaufnahme bei tiefer Temperatur anderseits widerspruchsfrei erfüllt.

Die Aufgabe wird durch ein Spreizmittel gelöst, wie es nach dem im Patentanspruch 1 dargelegten Verfahren erhalten wird.

Wie Untersuchungen nämlich ergeben haben, sind handelsübliche Expandermaterialien offenbar aufgrund ihrer nicht einheitlichen stofflichen Zusammensetzung nicht als Ganzes in dem aufgabengemäß gewünschten Sinne spreizmittelwirksam.

Es wurde jedoch gefunden, daß man eine sowohl den Kaltstart als auch die Stromaufnahme unterstützende Spreizmittelsubstanz dadurch verfügbar machen kann, daß man aus dem technischen Expandermaterial, welches sich aus einer ganzen Reihe von Holzinhaltsstoffen neben dem eigentlichen Lignin zusammensetzt, diejenigen Bestandteile selektiert, die sich mit Blick auf beide Erfordernisse wirksam verhalten. Dies geschieht, indem man eine Lösung oder Dispersion des Orginalexpanders mit einer Lösung oder Dispersion zusammenbringt, die fällungswirksame Metallionen enthält. Die Metallionen sind, einzeln oder in Kombination zu mehreren, vorzugweise aus der Reihe der mehrwertigen Kationen Pb²⁺, Ba²⁺, Mg²⁺, Al³⁺, Ca²⁺, Sr²⁺ ausgewählt. Das Fällungsmittel kann somit auch aus einer Suspension einer oder mehrerer Verbindungen aus einem oder mehreren der genannten Metalle bestehen.

Das Lösungs- oder Dispergiermittel für das Expandermaterial ist vorzugsweise Wasser, gegebenenfalls ein polares organisches Lösungsmittel oder beides. Gleiches gilt für das Fällungsmittel, welches überdies auch aus einer Kombination von Suspension und Lösung, jeweils das gleiche oder unterschiedliche Metalle enthaltend, bestehen kann.

Es ergibt sich daher von Fall zu Fall ein rein wässeriges, ein rein organisches oder ein gemischt wässerig-organisches Fällungssystem.

Dabei sollte das Gewichtsverhältnis zwischen dem Expandermaterial und dem Lösungs-bzw. Dispergiermittel in der Vorlage etwa 1:1000 und das Gewichtsverhältnis zwischen dem fällungswirksamen Metall und dem Lösungs- bzw. Dispergiermittel in dem Fällungsmittel ebenfalls etwa 1:1000 betragen.

Die Zugabe des Fällungsmittels erzeugt, je nach dessen Beschaffenheit, in dem pH-Bereich 3 bis 14 und bei Temperaturen zwischen 30 und 80°C, vorzugsweise zwischen 50 und 70°C einen Niederschlag, der von der restlichen Flüssigkeit durch Sedimentieren, Filtrieren oder Zentrifugieren abgetrennt und anschließend getrocknet wird.

Besonders vorteilhaft wird das Fällungsprodukt jedoch nach dem Abtrennen gereinigt. Zu diesem Zweck wird der Niederschlag mit verdünnter Essigsäure gewaschen und unter Verwendung eines polaren organischen Lösungsmittels wieder in Lösung gebracht. Die Lösung wird anschließend auf eine Adsorptionssäule gegeben, welche als stationäre Phase die organischen Expanderkomponenten adsorbiert. Das Material der Adsorptionssäule ist vorzugweise ein mit Oktadecylsilyl-Gruppen chemisch modifiziertes Kieselgel. (RP 18-Säule, reversed phase-extraction).

Zur nachfolgenden Desorption wird die Adsorptionssäule mit einem unpolaren Lösungsmittel behandelt und die Extraktflüssigkeit zwecks Gewinnung der organischen Bestandteile. Wie noch gezeigt wird, umfaßt das Fällungsprodukt im wesentlichen solche Komponenten des Ausgangsmaterials, welche die gewünschten Forderungen an das Kälteverhalten erfüllen, da sich ein Spreizmittelzusatz zur negativen Bleielektrode speziell aus diesem selektierten Material im elektrischen Versuch als wirksam sowohl inbezug auf die Kaltstartleistung als auch auf die Ladungsaufnahme erweist.

Erfindungsgemäß ist es somit möglich, durch Fraktionierung eines technischen organischen Expanders diesen so zu zerlegen, daß eine Fraktion, die sich durch Fällbarkeit mittels mehrwertiger Metallionen infolge Komplexbildung ergibt, im wesentlichen nur Expanderbestandteile mit den eigentlich gewünschten Eigenschaften umfaßt, während in der nicht fällbaren Fraktion alle diejenigen Bestandteile enthalten sind, die unwirksam sind oder sich im Batteriebetrieb sogar schädlich verhalten.

Bei den meistverwendeten technischen Expandern auf Ligninbasis entfallen etwa 60 bis 90% des Materials auf die fällbare Fraktion.

Die Zerlegbarkeit eines Expandermaterials in effiziente, fällbare Komponenten einerseits und unwirksame lösliche Komponenten andererseits liegt in der Vielfalt der in disem Produkt des Holzabbaues vereinigten Inhaltsstoffe begründet. Sie alle unterliegen gemeinsam dem Angriff des jeweils verwendeten chemischen Aufschlußmittels und werden durch dieses mehr oder weniger verändert. So enthält die originäre Calciumsulfit-Ablauge des Calciumsulfitaufschlusses bzw. deren ungereinigter Eindampfrückstand nicht nur Ligninsulfonsäure, sondern u.a. auch Zucker, Alkohole, Salze, niedermolekulare phenolische Verbindungen sowie Harze.

Der erfindungsgemäß wirksame Anteil des ursprünglichen Expandermaterials (= Summe der fällbaren Komponenten) wird als Spreizmittel in einer Konzentration von 0,05 bis 0,3 Gew.%, bezogen auf die aktive Masse der negativen Bleielektrode, eingesetzt.

Anhand eines Beispiels wird die Erfindung im folgenden verdeutlicht.

Eine typische Masse für negative Bleielektroden aus der üblichen Fertigung setzt sich zusammen aus
84,0 Gew.% Bleistaub
9,0 Gew.% Wasser
6,7 Gew.% Schwefelsäure (d = 1,40g/ml)
0,12 Gew.% Oxylignin
Rest bis 100 Gew.% Kunststoff-Flocken, Bariumsulfat, Ruß

Die Herstellung der Paste erfolgt in der üblichen Weise. Zunächst wird der Bleistaub mit den Flocken, dem Ruß und dem Bariumsulfat im trockenen Zustand vermischt. Danach werden das Wasser und eine Lösung des Spreizmittels (wäßrige oder wäßrigalkalische Lösung) zugegeben und durch intensives Rühren und Kneten mit den Feststoffen vermischt. Zum Schluß wird die Schwefelsäure unter weiterem Rühren langsam zugegeben.

Die fertige Paste wird in bekannter Weise von Hand oder maschinell in Gitter engestrichen. Die so gefertigten Platten durchlaufen dann einen Reifungsprozeß und können nach 2-3 Tagen formiert werden.

Die Formation vollzieht sich nach eienm bewährten Schema in aufeinanderfolgenden Zeitintervallen und mit abgestuften Strömen. Nach Beendigung der Formation werden die Platten mit Wasser säurefrei gewaschen und im Vakuum getrocknet.

Erfindungsgemäß wird anstelle des in der Masserezeptur für die negative Bleielektrode vorgesehenen Oxylignins, welches für ein handelsübliches Expandermaterial (Vanisperse) steht, dessen mit Metallionen fällbare Fraktion eingesetzt. Als Fällungsmittel läßt sich einmal z.B. ein Bleisalz, ein anderes Mal ein Bariumsalz verwenden. Dabei wird im einzelnen wie folgt vorgegangen:
1. Fällung mit Bleisalz
   Aus einer Lösung von 1g handelsüblichem Oxylignin in 200ml Wasser wird der wirksame Anteil mit einer Lösung von 2g Bleiacetat und 1ml Eisessig in 400ml Wasser in der Hitze (50-60°C) ausgefällt. Nach 10 bis 20 Stunden wird die überstehende Lösung abdekantiert und der Niederschlag durch Filtration (Schwarzbandfilter) vom Rest der Lösung getrennt, anschließend getrocknet und in einer wäßrigen Lösung von Natriumkarbonat, evtl. unter Zusatz eines organischen Lösungsmittels wie z.B. Methanol, gelöst. Die organischen Komponenten werden dann an die stationäre Phase einer Adsorptionssäule (wie weiter vorn beschrieben) adsorbiert. Das adsorbierte Produkt kann mit einem geeigneten Lösungsmittel (z.B. Methanol) ausgewaschen werden. Anschließend wird die Lösung zur Trockne eingedampft und das von Ionen des Fällungsmittels befreite Produkt wird in üblicher Weise in eine wäßrige Lösung überführt und dem Bleistaub zugesetzt.
2. Fällung mit Bariumsalz
   Die Fällungsprozedur und die Reinigung des Niederschlages entspricht ganz derjenigen beim Bleisalz. Das Fällungsmittel besteht in diesem Falle aus 1,86g Bariumacetat.

Mit dem erfindungsgemäßen Spreizmittel versehene Bleielektroden wurden im elektrischen Versuch auf Kapazitätsverhalten bei Raumtemperatur und Entladung mit dem 10-stündigen Strom [K₁₀, Ah/kg], Kaltstartkapazität [Ah/kg] und Stromaufnahme [A/kg] getestet.

In einer nachstehenden Tabelle sind die Ergebnisse zusammengestellt.

| Prüfung von Oxylignin-Fraktionen | | | |
|---|---|---|---|
| | K₁₀ Ah/kg | Kaltstartkapazität Ah/kg | Stromaufnahme A/kg |
| Handelsprodukt | 170 | 38 | 48 |
| mit Pb gefällt | 174 | 45 | 51 |
| mit Ba gefällt | 170 | 37 | 64 |

Dabei zeigt sich für die mit Bariumacetat und Bleiacetat gefällten Anteile des Handelprodukts eine gegenüber dem Ausgangsprodukt erhöhte Stromaufnahme, ganz besonders im Fall der Bariumfällung, ohne daß sich die Kaltstartkapazität verschlechtert hat. Im Falle der mit Bleiacetat gefällten Substanz liegt die Kaltstartkapazität sogar noch wesentlich über derjenigen des Handelsprodukts.

## Patentansprüche

1. Verfahren zur Herstellung eines Spreizmittels, dadurch gekennzeichnet, daß ein aus Holzinhaltsstoffen bestehendes Expandermaterial gelöst oder dispergiert wird und aus der Lösung bzw. Dispersion des Expandermaterials durch Zusatz von mehrwertigen Metallionen wie Pb²⁺, Ba²⁺, Mg²⁺, Al³⁺, Ca²⁺ oder Sr²⁺ ein Anteil gefällt, von der Restflüssigkeit abgetrennt und getrocknet wird.

2. Verfahren nach Anspruch 1, dadurch gekennzeichnet, daß der gefällte Anteil chromatografisch gereinigt wird.

3. Verwendung eines Spreizmittels, hergestellt nach einem der Ansprüche 1 und/oder 2, in einer Menge zwischen 0,05 Gew.% und 0,3 Gew.% in der aktiven Masse einer negativen Bleielektrode.

## Claims

1. Process for producing an expander, characterised in that an expander material comprising wood constituents is dissolved or dispersed, and there is precipitated from the solution or dispersion of the expander material as a result of the addition of multivalent metal ions such as Pb²⁺, Ba²⁺, Mg²⁺, Al³⁺, Ca²⁺ or Sr²⁺ a portion which is separated from the remaining liquid and is dried.

2. Process according to Claim 1, characterised in that the precipitated portion is purified by chromatography.

3. Use of an expander produced according to one of Claims 1 and/or 2, in a quantity of between 0.05 wt-% and 0.3 wt-% in the active mass of a negative lead electrode.

## Revendications

1. Procédé de fabrication d'un écarteur,
caractérisé en ce qu'
on dissout ou disperse une matière d'écarteur composée de contenus du bois et à partir de la solution ou de la dispersion de l'écarteur, avec adjonction de plusieurs ions métalliques tels que PB²⁺, Ba²⁺, Mg²⁺, Al³⁺, Ca²⁺ ou Sr²⁺, on précipite une fraction, que l'on sépare du liquide résiduel pour la sécher.

2. Procédé selon la revendication 1,
caractérisé en ce que
la partie précipitée est nettoyée de manière chromatographique.

3. Application d'un agent écarteur fabriqué selon l'une des revendications 1 et/ou 2 en une quantité comprise entre 0,05 % en poids et 0,3 % en poids dans la masse active d'une électrode au plomb négative.
